# EUROPEAN PATENT SPECIFICATION

(11) **EP 3 454 398 B1**
(45) Date of publication and mention of the grant of the patent: **10.08.2022**
(21) Application number: 18190912.8
(22) Date of filing: 27.08.2018
(51) Int. Cl.: H01M 4/505, H01M 4/525, H01M 4/62, H01M 10/0525

(54) **NONAQUEOUS ELECTROLYTE SECONDARY BATTERY**
SEKUNDÄRBATTERIE MIT WASSERFREIEM ELEKTROLYT
BATTERIE SECONDAIRE ÉLECTROLYTIQUE NON AQUEUSE

(30) Priority: 11.09.2017 JP 2017174333
(43) Date of publication of application: 13.03.2019
(73) Proprietor: TOYOTA JIDOSHA KABUSHIKI KAISHA, Toyota-shi, Aichi-ken, 471-8571 (JP)
(72) Inventor: NAKAYAMA, Tetsuri, Toyota-shi, Aichi-ken, 471-8571 (JP)
(74) Representative: Winter, Brandl - Partnerschaft mbB

(56) References cited:
- WO-A1-2016/136210
- WO-A1-2017/150020
- US-A1- 2014 329 146

## Description

### BACKGROUND OF THE INVENTION

### 1. Field of the Invention

The present teaching relates to a nonaqueous electrolyte secondary battery.

### 2. Description of the Related Art

In recent years, nonaqueous electrolyte secondary batteries such as lithium ion secondary batteries have been advantageously used as portable power sources for personal computers, mobile terminals and the like and driving power sources for vehicles such as electric vehicles (EV), hybrid vehicles (HV), and plug-in hybrid vehicles (PHV).

With the widespread use of nonaqueous electrolyte secondary batteries, further improvement in performance is desired. A technique of adding trilithium phosphate (Li₃PO₄) to the positive electrode active material layer in order to improve the performance of a nonaqueous electrolyte secondary battery is known (see, for example, Japanese Patent Application Publication No. H09-306547 and Japanese Patent Application Publication No. 2017-091664). A nonaqueous electrolyte secondary battery wherein a positive electrode mixture layer of a positive electrode contains a lithium transition metal oxide containing at least nickel, cobalt, manganese and tungsten and additionally Li₃PO₄ and WO₃ is disclosed in WO 2017/150020 A1. In US 2014/0329146 A1 is disclosed a nonaqueous electrolyte secondary battery with a positive-electrode active material comprising a lithium transition metal oxide containing lithium, nickel, cobalt and manganese, wherein a tungsten trioxide is attached to part of the surface of the lithium transition metal oxide and wherein among others WO₃ and Li₂WO₄ are preferred. A nonaqueous electrolyte secondary battery is further described in WO 2016/136210 A1, wherein the positive electrode material comprises Li₃PO₄, WO₃ and a Ni-rich lithium transition metal oxide comprising Co and Mn.

### SUMMARY OF THE INVENTION

However, as a result of intensive research conducted by the inventor of the present teaching, it was found that the nonaqueous electrolyte secondary battery in which Li₃PO₄ has been added to a positive electrode active material layer has a problem that a capacity decreases in high-temperature storage.

In view of the above, an object of the present teaching is to provide a nonaqueous electrolyte secondary battery in which Li₃PO₄ is added to a positive electrode active material layer and which has an excellent high-temperature storage characteristic.

The nonaqueous electrolyte secondary battery disclosed herein includes a positive electrode, a negative electrode, and a nonaqueous electrolytic solution. The positive electrode includes a positive electrode active material layer. The positive electrode active material layer includes Li₃PO₄, Li₂WO₄, and, as a positive electrode active material, a lithium transition metal complex oxide including at least lithium, nickel, manganese, and cobalt. A mass ratio of Li₃PO₄ to the positive electrode active material is 1% by mass or more and 5% by mass or less. A mass ratio of Li₂WO₄ to the positive electrode active material is 0.2% by mass or more and 0.9% by mass or less.

When the mass ratio of Li₃PO₄ to the positive electrode active material is less than 1% by mass, the content of phosphorus in the coating film formed on the surface of the positive electrode active material becomes insufficient, and the amount of organic components in the coating film increases. As a result, the function of protecting the positive electrode active material demonstrated by the coating film is deteriorated, and the high-temperature storage characteristic is deteriorated. When the mass ratio of Li₃PO₄ to the positive electrode active material exceeds 5% by mass, the content of phosphorus in the coating film formed on the surface of the positive electrode active material becomes excessive, an inorganic component locally grows in the coating film, and compactness of the coating film is decreased. As a result, the high-temperature storage characteristic is deteriorated. When the mass ratio of Li₂WO₄ to the positive electrode active material is less than 0.2% by mass, the content of tungsten in the coating film becomes insufficient and the amount of organic component in the coating film increases. As a result, the function of protecting the positive electrode active material demonstrated by the coating film is deteriorated and the high-temperature storage characteristic is deteriorated. When the mass ratio of Li₂WO₄ to the positive electrode active material exceeds 0.9% by mass, the content of tungsten in the coating film formed on the surface of the positive electrode active material becomes excessive, an inorganic component locally grows in the coating film, and compactness of the coating film is decreased. As a result, the high-temperature storage characteristic is deteriorated.

Therefore, by adequately controlling the content of Li₃PO₄ and the content of Li₂WO₄, it is possible to form a dense coating film having ion conductivity (in particular, conductivity of ions serving as charge carriers) on the surface of the positive electrode active material and to suppress deterioration of the positive electrode active material in high-temperature storage. Therefore, with such features, it is possible to provide a nonaqueous electrolyte secondary battery in which Li₃PO₄ is added to a positive electrode active material layer and which has an excellent high-temperature storage characteristic.

In a desired embodiment of the nonaqueous electrolyte secondary battery disclosed herein, a content of nickel with respect to a total content of nickel, manganese, and cobalt in the lithium transition metal composite oxide is 34 mol% or more.

Because of such a feature, the electric resistance of the nonaqueous electrolyte secondary battery decreases and the capacity increases.

In a desired embodiment of the nonaqueous electrolyte secondary battery disclosed herein, Li₃PO₄ is in a particulate shape with an average particle diameter of 10 µm or less.

In this case, Li₃PO₄ is likely to decompose uniformly during the formation of the coating film, compactness of the coating film formed can be increased, and the high-temperature storage characteristic of the nonaqueous electrolyte secondary battery can be further improved.

### BRIEF DESCRIPTION OF THE DRAWINGS

FIG. 1 is a cross-sectional view schematically showing the internal structure of a lithium ion secondary battery according to one embodiment of the present teaching; and
FIG. 2 is a schematic view showing the configuration of a wound electrode body of a lithium ion secondary battery according to one embodiment of the present teaching.

### DESCRIPTION OF THE PREFERRED EMBODIMENT

Embodiments of the present teaching will be described below with reference to the drawings. Incidentally, the matters other than those specifically mentioned in the present specification and necessary for the implementation of the present teaching (for example, the general configuration and production process of a nonaqueous electrolyte secondary battery not characterizing the present teaching) can be understood as design matters to be addressed by a person skilled in the art on the basis of the related art in the pertinent field. The present teaching can be carried out based on the contents disclosed in this specification and technical common sense in the field. In addition, in the following drawings, the same reference numerals are attached to members and parts that exhibit the same action. Further, the dimensional relationship (length, width, thickness, and the like) in each drawing does not reflect the actual dimensional relationship.

In this specification, the term "secondary battery" generally refers to a power storage device that can be repeatedly charged and discharged, and this term is inclusive of power storage elements such as a so-called power storage battery and an electric double layer capacitor.

Further, the term "nonaqueous electrolyte secondary battery" refers to a battery including a nonaqueous electrolytic solution (typically, a nonaqueous electrolytic solution including a supporting electrolyte in a nonaqueous solvent).

Hereinafter, the present teaching will be described in detail by taking a flat angular lithium ion secondary battery having a flat-shaped wound electrode body and a flat-shaped battery case as an example, but the present teaching is not intended to be limited to the configuration described in the embodiment.

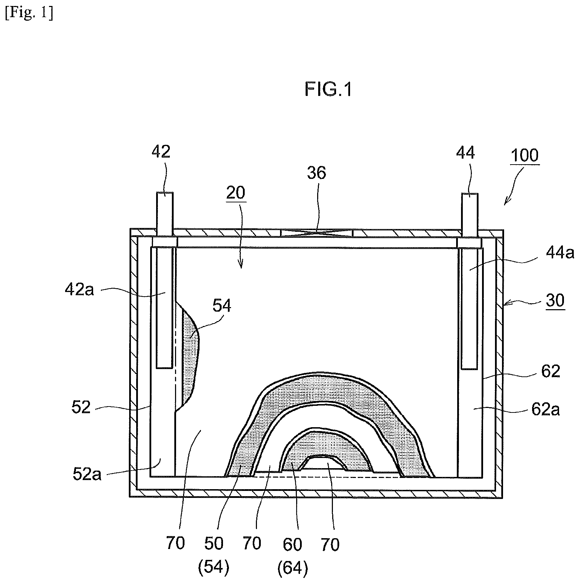

A lithium ion secondary battery 100 shown in FIG. 1 is a sealed battery constructed by accommodating a flat-shaped wound electrode body 20 and a nonaqueous electrolytic solution (not shown) in a flat angular battery case (that is, an outer case) 30. The battery case 30 is provided with a positive electrode terminal 42 and a negative electrode terminal 44 for external connection and a thin safety valve 36 which is set so as to release an internal pressure when the internal pressure of the battery case 30 rises to a predetermined level or higher. In addition, an injection port (not shown) for injecting the nonaqueous electrolytic solution is provided in the battery case 30. The positive electrode terminal 42 is electrically connected to the positive electrode current collector plate 42a. The negative electrode terminal 44 is electrically connected to the negative electrode current collector plate 44a. As a material of the battery case 30, for example, a lightweight metal material having good thermal conductivity such as aluminum is used.

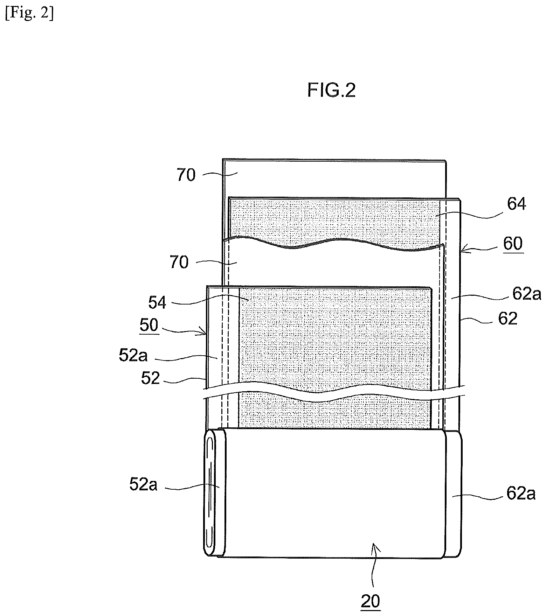

As shown in FIGS. 1 and 2, the wound electrode body 20 has a structure obtained by laminating a positive electrode sheet 50 in which a positive electrode active material layer 54 is formed along the longitudinal direction on one side or both sides (here, both sides) of an elongated positive electrode current collector 52 and a negative electrode sheet 60 in which a negative electrode active material layer 64 is formed along the longitudinal direction on one side or both sides (here, both sides) of an elongated negative electrode current collector 62, with two elongated separator sheets 70 being interposed therebetween, and winding the laminate in the longitudinal direction. A positive electrode active material layer non-formation portion 52a (that is, a portion where the positive electrode active material layer 54 is not formed and the positive electrode current collector 52 is exposed) and a negative electrode active material layer non-formation portion 62a (that is, a portion where the negative electrode active material layer 64 is not formed and the negative electrode current collector 62 is exposed), which are formed to protrude to the outside from both ends of the wound electrode body 20 in the winding axis direction (that is, a sheet width direction orthogonal to the longitudinal direction) are joined to a positive electrode current collector plate 42a and a negative electrode current collector plate 44a, respectively.

The positive electrode current collector 52 constituting the positive electrode sheet 50 is exemplified by an aluminum foil or the like.

The positive electrode active material layer 54 includes Li₃PO₄, Li₂WO₄, and a positive electrode active material.

Li₃PO₄ is a component contributing to the formation of a coating film on the surface of the active material, and the coating film which is formed includes phosphorus atoms derived from Li₃PO₄.

Li₃PO₄ is present as a distinct substance without solid-phase mixing with the positive electrode active material or Li₂WO₄. Li₃PO₄ is typically present as particles separate from the positive electrode active material and Li₂WO₄.

Li₃PO₄ is desirably in a particulate shape with an average particle diameter of 10 µm or less. In this case, Li₃PO₄ is likely to decompose uniformly during the formation of the coating film, compactness of the coating film formed can be increased, and the high-temperature storage characteristic of the lithium ion secondary battery 100 can be further improved. Meanwhile, from the viewpoint of preventing excessive decomposition of Li₃PO₄ due to the increase in specific surface area, it is desirable that Li₃PO₄ be in a particulate shape with an average particle diameter of 1 µm or more.

The average particle diameter of Li₃PO₄ can be measured, for example, as a value of the particle diameter (D50) at 50% accumulation from a fine particle side in a cumulative particle size distribution curve obtained by a laser diffraction-scattering method using N-methyl pyrrolidone for a solvent.

Li₂WO₄ is a component contributing to the formation of a coating film on the surface of the active material, and the coating film which is formed includes tungsten atoms derived from Li₂WO₄.

Li₂WO₄ is present as a distinct substance without solid-phase mixing with the positive electrode active material or Li₃PO₄. Li₂WO₄ is typically present as particles separate from the positive electrode active material and Li₃PO₄.

When Li₂WO₄ is in a particulate shape, the average particle diameter thereof is not particularly limited, and it is desirable that Li₂WO₄ have a surface area such that decomposition for formation of the coating film occurs appropriately. Accordingly, the average particle diameter of Li₂WO₄ is desirably 0.01 µm or more and 15 µm or less, and more desirably 0.1 µm or more and 12 µm or less.

The average particle diameter of Li₂WO₄ can be measured by, for example, a laser diffraction-scattering method using N-methyl pyrrolidone as a solvent.

A lithium transition metal composite oxide including at least lithium, nickel, manganese, and cobalt is used as a positive electrode active material. Thus, in the present embodiment, a lithium-nickel-manganese-cobalt-based composite oxide is used as the positive electrode active material. The lithium-nickel-manganese-cobalt-based composite oxide desirably has a layered rock salt type structure.

The content of nickel with respect to the total content of nickel, manganese, and cobalt in the lithium-nickel-manganese-cobalt-based composite oxide is not particularly limited, but is desirably 34 mol% or more. In this case, the electric resistance of the lithium ion secondary battery 100 decreases and the capacity increases. From the viewpoint of not lowering the performance of the lithium-nickel-manganese-cobalt-based composite oxide as the positive electrode active material, the content of nickel with respect to the total content of nickel, manganese, and cobalt is desirably 60 mol% or less.

The lithium-nickel-manganese-cobalt-based composite oxide may further include a metal element other than lithium, nickel, manganese, and cobalt (for example, Zr, Mo, W, Mg, Ca, Na, Fe, Cr, Zn, Si, Sn, Al, and the like).

A lithium-nickel-manganese-cobalt-based composite oxide represented by a following Formula (I) can be advantageously used as the positive electrode active material.

LiₐNiₓMn_{y}Co_{z}O₂ (I)

Here, a satisfies 0.98 ≤ a ≤ 1.20; x, y and z satisfy x + y + z = 1; x desirably satisfies 0.20 ≤ x ≤ 0.60, and more desirably 0.34 ≤ x ≤ 0.60; y desirably satisfies 0 < y ≤ 0.50, and more desirably 0 < y ≤ 0.40; and z desirably satisfies 0 < z ≤ 0.50, and more desirably 0 < z ≤ 0.40.

The positive electrode active material layer 54 may further include a positive electrodc active material other than the lithium-nickel-manganese-cobalt-based composite oxide within a range in which the effect of the present teaching is not impaired.

The content of the positive electrode active material is desirably 70% by mass or more, and more desirably 75% by mass or more in the positive electrode active material layer 54 (that is, with respect to the total mass of the positive electrode active material layer 54).

In the present embodiment, the mass ratio of Li₃PO₄ to the positive electrode active material is 1% by mass or more and 5% by mass or less.

Where the mass ratio of Li₃PO₄ to the positive electrode active material is less than 1% by mass, the content of phosphorus in the coating film formed on the surface of the positive electrode active material is insufficient and the amount of organic component in the coating film increases. As a result, the function of protecting the positive electrode active material demonstrated by the coating film is decreased and the high-temperature storage characteristic deteriorates. Where the mass ratio of Li₃PO₄ to the positive electrode active material exceeds 5% by mass, the content of phosphorus in the coating film formed on the surface of the positive electrode active material becomes excessive, an inorganic component locally grows in the coating film, and compactness of the coating film is decreased. As a result, the high-temperature storage characteristic deteriorates.

The mass ratio of Li₃PO₄ to the positive electrode active material is desirably 1.5% by mass or more and 4.5% by mass or less, and more desirably 2% by mass or more and 4% by mass or less.

In the present embodiment, the mass ratio of Li₂WO₄ to the positive electrode active material is 0.2% by mass or more and 0.9% by mass or less.

Where the mass ratio of Li₂WO₄ to the positive electrode active material is less than 0.2% by mass, the content of tungsten in the coating film is insufficient and the amount of organic component in the coating film increases. As a result, the function of protecting the positive electrode active material demonstrated by the coating film is decreased and high-temperature storage characteristic deteriorates. Where the mass ratio of Li₂WO₄ to the positive electrode active material exceeds 0.9% by mass, the content of tungsten in the coating film formed on the surface of the positive electrode active material becomes excessive, an inorganic component locally grows in the coating film, and compactness of the coating film is decreased. As a result, the high-temperature storage characteristic deteriorates.

The mass ratio of Li₂WO₄ to the positive electrode active material is desirably 0.25% by mass or more and 0.85% by mass or less, and more desirably 0.3% by mass or more and 0.75% by mass or less.

The positive electrode active material layer 54 may include components other than Li₃PO₄, Li₂WO₄, and the positive electrode active material. Examples thereof include a conductive material, a binder, and the like.

For example, carbon black such as acetylene black (AB) or other carbon materials (for example, graphite or the like) can be advantageously used as the conductive material. The content of the conductive material in the positive electrode active material layer 54 is desirably 1% by mass or more and 15% by mass or less, and more desirably 3% by mass or more and 12% by mass or less.

For example, polyvinylidene fluoride (PVdF) or the like can be used as the binder. The content of the binder in the positive electrode active material layer 54 is desirably 1% by mass or more and 15% by mass or less, and more desirably 2% by mass or more and 12% by mass or less.

In the positive electrode active material layer 54, the positive electrode active material, Li₃PO₄, and Li₂WO₄ may be dispersed (particularly uniformly) as separate particles, or either one of or both of Li₃PO₄ particles and Li₂WO₄ particles may be attached to the surface of the positive electrode active material particles. Further, when a conductive material is used, either one of or both of Li₃PO₄ particles and Li₂WO₄ particles may be attached to the surface of the conductive material.

The positive electrode active material layer 54 is formed by preparing a paste for forming the positive electrode active material layer, which contains a positive electrode active material, Li₃PO₄, Li₂WO₄, and optional components, coating the paste on the positive electrode current collector 52, drying, and then pressing as necessary. A method for preparing the paste for forming the positive electrode active material layer is not particularly limited. For example, a paste can be prepared by adding a positive electrode active material, Li₃PO₄, Li₂WO₄, and optional components to a solvent (for example, N-methyl pyrrolidone) and mixing. A paste may also be prepared by coating the surface of the positive electrode active material particles with either one of or both of Li₃PO₄ particles and Li₂WO₄ particles and then mixing with other components and a solvent. Further, a paste may also be prepared by coating the surface of conductive material particles with either one of or both of Li₃PO₄ particles and Li₂WO₄ particles and then mixing with other components and a solvent.

The negative electrode current collector 62 constituting the negative electrode sheet 60 can be exemplified by a copper foil or the like. For example, a carbon material such as graphite, hard carbon, soft carbon or the like can be used as the negative electrode active material to be included in the negative electrode active material layer 64. The graphite may be natural graphite or artificial graphite, and may be amorphous carbon-coated graphite in which graphite is coated with an amorphous carbon material. The negative electrode active material layer 64 may include components other than the active material, such as a binder and a thickener. For example, styrene butadiene rubber (SBR) or the like can be used as the binder. For example, carboxymethyl cellulose (CMC) or the like can be used as the thickener.

The content of the negative electrode active material in the negative electrode active material layer is desirably 90% by mass or more, and more desirably 95% by mass or more and 99% by mass or less. The content of the binder in the negative electrode active material layer is desirably 0.1% by mass or more and 8% by mass or less, and more desirably 0.5% by mass or more and 3% by mass or less. The content of the thickener in the negative electrode active material layer is desirably 0.3% by mass or more and 3% by mass or less, and more desirably 0.5% by mass or more and 2% by mass or less.

The separator 70 can be exemplified a porous sheet (film) made of a resin such as polyethylene (PE), polypropylene (PP), a polyester, cellulose, a polyamide and the like. Such a porous sheet may have a single layer structure or a laminate structure of two or more layers (for example, a three layer structure in which a PP layer is laminated on both surfaces of a PE layer). A heat-resistant layer (HRL) may be provided on the surface of the separator 70.

The nonaqueous electrolytic solution typically includes a nonaqueous solvent and a supporting salt.

As the nonaqueous solvent, an organic solvent such as various carbonates, ethers, esters, nitriles, sulfones, lactones and the like usable for an electrolytic solution of a general lithium ion secondary battery can be used without particular limitation. Specific examples include ethylene carbonate (EC), propylene carbonate (PC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), trifluorodimethyl carbonate (TFDMC), and the like. Such nonaqueous solvents may be used singly or in appropriate combination of two or more thereof.

As the supporting salt, for example, a lithium salt such as LiPF₆, LiBF₄, LiClO₄ or the like (desirably LiPF₆) can be used. The concentration of the supporting salt is desirably 0.7 mol/L or more and 1.3 mol/L or less.

As long as the effect of the present teaching is not remarkably impaired, the nonaqueous electrolytic solution may include components other than the above-mentioned components, for example, various additives such as a coating film formation agent; a gas generating agent such as biphenyl (BP), cyclohexylbenzene (CHB), a thickener, and the like.

In the related art, only Li₃PO₄ is added to the positive electrode active material layer. In the lithium ion secondary battery 100 in which Li₃PO₄ is added to the positive electrode active material layer, Li₃PO₄ is slightly decomposed in repeated charging and discharging, and a coating film derived from Li₃PO₄ is formed on the surface of the positive electrode active material. In the related art, the high-temperature storage characteristic is insufficient and the composition of the coating film derived from the Li₃PO₄ conceivably affects the high-temperature performance characteristic.

By contrast in the present embodiment, since Li₃PO₄ and Li₂WO₄ are present as components contributing to the formation of the coating film, they are both decomposed, and a coating film derived from Li₃PO₄ and Li₂WO₄ and including phosphorus atoms and tungsten atoms is densely formed due to some sort of interaction (supposedly, an extremely fine coating film is formed in which an organic compound and an inorganic compound in which Li, P, W, and O are combined together are adequately arranged).

Therefore, by using a lithium-nickel-manganese-cobalt-based composite oxide for a positive electrode active material and adequately controlling the content of Li₃PO₄ and the content of Li₂WO₄, as described hereinabove, it is possible to form a dense coating film including phosphorus atoms and tungsten atoms and having high ion conductivity (in particular, the conductivity of ions serving as charge carriers) on the surface of the positive electrode active material and to suppress the deterioration of the positive electrode active material at the time of high-temperature storage. Thus, by combining a specific amount of Li₃PO₄ and a specific amount of Li₂WO₄, it is possible to provide the lithium ion secondary battery 100 with excellent high-temperature storage characteristic (in particular, excellent resistance to capacity deterioration during high-temperature storage).

The lithium ion secondary battery 100 configured as described above can be used for various purposes. Suitable applications include a driving power supply installed on a vehicle such as an electric vehicle (EV), a hybrid vehicle (HV), a plug-in hybrid vehicle (PHV), or the like. Typically, the lithium ion secondary battery 100 can also be used in the form of a battery pack in which a plurality of lithium ion secondary batteries 100 is connected in series and/or in parallel.

The rectangular lithium ion secondary battery 100 including the flat-shaped wound electrode body 20 has been described hereinabove by way of example. However, the nonaqueous electrolyte secondary battery disclosed herein can also be configured as a lithium ion secondary battery including a stacked electrode body. Further, the nonaqueous electrolyte secondary battery disclosed herein can also be configured as a cylindrical lithium ion secondary battery. The nonaqueous electrolyte secondary battery disclosed herein can also be configured as a nonaqueous electrolyte secondary battery other than the lithium ion secondary battery.

Hereinafter, examples relating to the present teaching will be described, but the present teaching is not intended to be limited to the configurations shown in the examples.

Preparation of Evaluation Lithium Ion Secondary Batteries A1 to A5 and B1 to B7 LiNi_{0.34}Co_{0.33}Mn_{0.33}O₂ (LNCM) with a layered rock-salt type structure as a positive electrode active material, Li₃PO₄ having an average particle diameter shown in Table 1, Li₂WO₄ having an average particle diameter of 10 µm, acetylene black (AB) as a conductive material, and polyvinylidene fluoride (PVdF) as a binder were mixed with N-methyl-2-pyrrolidone (NMP) at a mass ratio of LNCM : Li₃PO₄ : Li₂WO₄ : AB : PVdF = 100 : q : r : 13 : 13 (q and r are values shown in Table 1) to prepare a paste for forming a positive electrode active material layer. This paste was coated on an aluminum foil and dried to form a positive electrode active material layer. Subsequently, press treatment was performed to prepare a positive electrode sheet.

Further, natural graphite (C) as a negative electrode active material, styrene butadiene rubber (SBR) as a binder, and carboxymethyl cellulose (CMC) as a thickener were mixed with ion exchanged water at a ratio of C : SBR : CMC = 98 : 1 : 1 to prepare a paste for forming a negative electrode active material layer. This paste was coated on a copper foil, dried, and pressed to prepare a negative electrode sheet.

A porous polyolefin sheet was prepared as a separator sheet.

A mixed solvent including ethylene carbonate (EC), ethyl methyl carbonate (EMC) and dimethyl carbonate (DMC) at a volume ratio of 1 : 1 : 1 was prepared, and LiPF₆ as a supporting salt was dissolved to a concentration of 1.0 mol/L to prepare a nonaqueous electrolytic solution.

The evaluation lithium ion secondary batteries A1 to A5 and B1 to B7 were prepared using the positive electrode sheet, the negative electrode sheet, the separator, and the nonaqueous electrolytic solution.

### Evaluation of High-temperature Storage Characteristic

Each prepared evaluation lithium ion secondary battery was adjusted to state of charge (SOC) 80%, and then stored for 10 days in a high-temperature oven set at 55°C. After that, two cycles of charging and discharging were carried out with a current value of 1 C, and the discharge capacity at the second cycle was obtained. Then, for each evaluation lithium ion secondary battery, the ratio of the discharge capacity was calculated by taking the predetermined reference value of the discharge capacity as 100. The results are shown in Table 1.

### [Table 1]

**Table 1**

| Battery No. | Content (% by mass) | | Average particle diameter of Li₃PO₄ (µm) | High-temperature storage characteristic (capacity ratio) |
|---|---|---|---|---|
| | Li₃PO₄ (q) | Li₂WO₄ (r) | | |
| A1 | 1 | 0.2 | 10 | 111 |
| A2 | 5 | 0.2 | 11 | 107 |
| A3 | 1 | 0.9 | 10 | 116 |
| A4 | 5 | 0.9 | 10 | 109 |
| A5 | 3 | 0.5 | 10 | 122 |
| B1 | 0.5 | 1 | 11 | 95 |
| B2 | 0.5 | 0.1 | 11 | 91 |
| B3 | 6 | 1 | 10 | 96 |
| B4 | 6 | 0.1 | 11 | 86 |
| B5 | 3.5 | 0 | 11 | 82 |
| B6 | 0 | 1.2 | 11 | 79 |
| B7 | 0 | 0.6 | 11 | 76 |

From the results shown in Table 1, it is understood that when a lithium-nickel-manganese-cobalt-based composite oxide is used as a positive electrode active material in a lithium ion secondary battery in which Li₃PO₄ is added to a positive electrode active material layer, the mass ratio of Li₃PO₄ to the positive electrode active material is 1% by mass or more and 5% by mass or less, and the mass ratio of Li₂WO₄ to the positive electrode active material is 0.2% by mass or more and 0.9% by mass or less, a decrease in capacity during storage at high temperature is suppressed.

Therefore, it is understood that the nonaqueous electrolyte secondary battery disclosed herein has excellent high-temperature storage characteristic.

Although specific examples of the present teaching have been described in detail above, these are merely illustrative and do not limit the scope of the claims. Techniques described in the claims include those in which the concrete examples exemplified hereinabove are variously modified and changed.

## Claims

1. A nonaqueous electrolyte secondary battery comprising a positive electrode, a negative electrode, and a nonaqueous electrolytic solution, wherein
the positive electrode includes a positive electrode active material layer;
the positive electrode active material layer includes Li₃PO₄, Li₂WO₄, and, as a positive electrode active material, a lithium transition metal complex oxide including at least lithium, nickel, manganese, and cobalt;
a mass ratio of Li₃PO₄ to the positive electrode active material is 1% by mass or more and 5% by mass or less; and
a mass ratio of Li₂WO₄ to the positive electrode active material is 0.2% by mass or more and 0.9% by mass or less.

2. The nonaqueous electrolyte secondary battery according to claim 1, wherein a content of nickel with respect to a total content of nickel, manganese, and cobalt in the lithium transition metal composite oxide is 34 mol% or more.

3. The nonaqueous electrolyte secondary battery according to claim 1 or 2, wherein Li₃PO₄ is in a particulate shape with an average particle diameter of 10 µm or less.

## Patentansprüche

1. Sekundärbatterie mit nichtwässrigem Elektrolyt, umfassend eine positive Elektrode, eine negative Elektrode und eine nichtwässrige Elektrolytlösung, wobei
die positive Elektrode eine Positivelektrodenaktivmaterialschicht aufweist;
die Positivelektrodenaktivmaterialschicht Li₃PO₄, Li₂WO₄ und als Positivelektrodenaktivmaterial ein Lithiumübergangsmetallkomplexoxid, das mindestens Lithium, Nickel, Mangan und Cobalt enthält, umfasst;
ein Massenverhältnis von Li₃PO₄ zu dem Positivelektrodenaktivmaterial 1 Massenprozent oder mehr und 5 Massenprozent oder weniger beträgt; und
ein Massenverhältnis von Li₂WO₄ zu dem Positivelektrodenaktivmaterial 0,2 Massenprozent oder mehr und 0,9 Massenprozent oder weniger beträgt.

2. Sekundärbatterie mit nichtwässrigem Elektrolyt nach Anspruch 1, wobei der Gehalt an Nickel in Bezug auf den Gesamtgehalt an Nickel, Mangan und Cobalt in dem Lithiumübergangsmetallmischoxid 34 Mol-% oder mehr beträgt.

3. Sekundärbatterie mit nichtwässrigem Elektrolyt nach Anspruch 1 oder 2, wobei Li₃PO₄ in einer Teilchenform mit einem durchschnittlichen Teilchendurchmesser von 10 µm oder weniger vorliegt.

## Revendications

1. Batterie secondaire électrolytique non aqueuse comprenant une électrode positive, une électrode négative et une solution électrolytique non aqueuse, dans laquelle
l'électrode positive inclut une couche de matériau actif d'électrode positive ;
la couche de matériau actif d'électrode positive inclut Li₃PO₄, Li₂WO₄, et, en tant que matériau actif d'électrode positive, un oxyde complexe de lithium et de métal de transition incluant au moins du lithium, du nickel, du manganèse et du cobalt ;
un rapport massique de Li₃PO₄ au matériau actif d'électrode positive est de 1 % en masse ou plus et de 5 % en masse ou moins ; et
un rapport massique de Li₂WO₄ au matériau actif d'électrode positive est de 0,2 % en masse ou plus et de 0,9 % en masse ou moins.

2. Batterie secondaire électrolytique non aqueuse selon la revendication 1, dans laquelle une teneur en nickel par rapport à une teneur totale en nickel, manganèse et cobalt dans l'oxyde composite de lithium et de métal de transition est de 34 % en mole ou plus.

3. Batterie secondaire électrolytique non aqueuse selon la revendication 1 ou 2, dans laquelle Li₃PO₄ est sous une forme particulaire avec un diamètre moyen de particule de 10 µm ou moins.
